# EUROPÄISCHE PATENTANMELDUNG

(11) **EP 1 155 732 A1**
(43) Veröffentlichungstag der Anmeldung: **21.11.2001**
(21) Anmeldenummer: 00110353.0
(22) Anmeldetag: 15.05.2000
(51) Int. Cl.: B01D 53/73, B01D 53/64, B01D 53/58, C01C 1/10, C01C 1/02, C04B 18/06

(54) **Verfahren zur Behandlung von Rückständen aus Rauchgasreinigungs- und/oder Rauchgasentschwefelungsanlagen**

(71) Anmelder: Reatec GmbH, 67551 Worms (DE)
(72) Erfinder: Merkler, Georg-Paul, Dr., 76744 Wörth (DE); Giurgea, Vlad Ion, Dr., 76137 Karlsruhe (DE)
(74) Vertreter: Durm, Frank, Dipl.-Ing.

(57) **Zusammenfassung**

Rückstände aus Rauchgasreinigungs- und/oder Rauchgasentschwefelungsanlagen von Raffinerien enthalten hochtoxische Schadstoffe, nämlich unter anderem Ammonium und Schwermetalle.

Durch Vermischen der Rückstände mit Wasser, Erhitzen, Zugabe von Kalk und weiterem Erhitzen des Gemischs auf Siedetemperatur erfolgt eine chemische Reaktion, bei der Ammoniak entweicht. Anschließend wird das Gemisch abgekühlt. Dabei beträgt der pH-Wert mindestens 8. In der vom Prozesswasser getrennten feucht-festen Phase sind die Schwermetalle in wasserunlöslicher Form gebunden.

Endprodukt des Verfahrens ist eine Trockensubstanz, die gefahrlos deponiert oder zu einem Wirtschaftsgut weiterverarbeitet werden kann, beispielsweise zu Baumaterial.

## Beschreibung

Die Erfindung befasst sich mit Rückständen aus Rauchgasreinigungs- und/oder Rauchgasentschwefelungsanlagen, welche unter anderem Ammonium und Schwermetalle enthalten. Solche Rückstände fallen beispielsweise in Form von Asche - sogenannte REA-Asche - aus den Rauchgasreinigungs- und Rauchgasentschwefelungsanlagen von Erdölraffinerien an. Aufgrund des darin enthaltenen Ammoniums und des relativ hohen Gehalts von Schwermetallen, darunter Vanadium, sind diese Rückstände bzw. Aschen hochtoxisch.

Raffinationsreststoffe werden üblicherweise eingeschmolzen und verglast, wodurch die hochtoxischen Schadstoffe immobilisiert werden. Ein Vorteil dieses Verfahrens ist, dass wertvolle Metalle, wie insbesondere das Vanadium, aus der Schmelze abgetrennt und als Wertstoff gewonnen werden können; nachteilig ist die spezielle Technologie, der hohe Energiebedarf, die Transportproblematik der Reststoffe und die damit verbundenen Kosten.

Die DE 198 07 356 A1 beschreibt ein Verfahren zur Entsorgung und/oder Verwertung von Filterstäuben und/oder Rauchgasreinigungsrückständen aus Müllverbrennungsanlagen und aufbereiteten und abgelagerten Müllverbrennungs-Rohschlacken, bei dem ein elutionsbeständiger und druckstabiler Festkörper hergestellt wird, wobei als anorganisches carbonatisches Bindemittel gebrannter oder gelöschter Kalk oder Kalkmilch verwendet wird.

Die DE 197 19 684 C1 beschreibt ein Verfahren zur Herstellung von Speichermineralen für die Immobilisierung von Schadstoffen, wobei ein oder mehrere Aschen und wasserhaltige Substanzen und gegebenenfalls Calciumoxid gemischt werden und die Mischung in einem Reaktor bei Temperaturen zwischen 100 und 600° C erhitzt wird.

Ausgehend von dem beschriebenen Stand der Technik liegt der vorliegenden Erfindung das technische Problem zugrunde, Rückstände aus Rauchgasreinigungs- und/oder Rauchgasentschwefelungsanlagen, insbesondere von Raffinerien, unter geringstmöglichem Einsatz von Energie so zu behandeln, dass die darin enthaltenen Schadstoffe entfernt oder vollständig immobilisiert werden, so dass die verbleibenden Reststoffe entweder problemlos deponiert oder als Wirtschaftsgut verwertet werden können.

Gelöst wird die gestellte Aufgabe zunächst durch das im Patentanspruch 1 angegebene Verfahren. Danach werden die zu behandelnden Rückstände mit Wasser vermischt und die so gebildete Suspension auf 50° bis 80° C erhitzt. Anschließend wird Kalk oder Kalkmilch zugegeben und das Gemisch auf Siedetemperatur erhitzt. Dabei entweicht das in der Suspension gebundene Ammonium als gasförmiges Ammoniak. Die Siedetemperatur wird solange aufrechterhalten, bis im wesentlichen kein Ammoniak mehr entweicht. Anschließend wird das Gemisch auf eine Temperatur von unter 30° C abgekühlt. Danach kann das Prozesswasser von der feucht-festen Phase getrennt werden, in welcher nun die Schwermetalle in wasserunlöslicher Form gebunden sind. Wesentlich ist, dass soviel Kalk bzw. Kalkmilch zugegeben wird, dass der pH-Wert des Gemischs nach dem Abkühlen mindestens 8 beträgt.

Ein möglicher unerwünschter Nebeneffekt des Verfahrens nach Patentanspruch 1 ist die Freisetzung von Aluminium, welches am Ende noch in löslicher Form in der feucht-festen Phase enthalten ist. In vorteilhafter und zweckmäßiger Weiterbildung des erfindungsgemäßen Verfahrens wird deshalb in einem zusätzlichen Verfahrensschritt das in der feucht-festen Phase enthaltene Aluminium mit frischem Wasser ausgespült. Das in der wässrigen Lösung enthaltene Aluminium kann dann durch eine spezielle Behandlung ausgefällt werden.

Alternativ wird die gestellte Aufgabe auch gelöst durch das im Patentanspruch 3 angegebene Verfahren. Der Unterschied zu dem Verfahren gemäß Patentanspruch 1 besteht im wesentlichen nur darin, dass nach dem Vermischen der Rückstände mit Wasser und dem erstmaligen Erhitzen der Suspension auf 50° bis 80° C nunmehr gleich die feucht-feste Phase von der wässrigen Lösung getrennt wird, und dass dann nur noch diese wässrige Lösung, welche das Ammonium und die Schwermetalle enthält, den weiteren Verfahrensschritten unterzogen wird. Der besondere Vorteil dieses Verfahrens besteht darin, dass das in der feucht-festen Phase gebundene Aluminium erst gar nicht freigesetzt wird.

Das Restprodukt des Verfahrens von Patentanspruch 1 ist eine einzige feucht-feste Phase, in welcher die Schwermetalle in wasserunlöslicher Form gebunden sind. Bei dem Verfahren gemäß Patentanspruch 3 fallen am Ende zwei getrennte feste Substanzen an, nämlich eine im wesentlichen schadstoffreie feucht-feste Phase sowie Gips, in welchem die Schwermetalle in wasserunlöslicher Form gebunden sind. Das bei beiden alternativen Verfahren entstehende Ammoniakgas kann aufgefangen und verwertet werden.

Es hat sich als zweckmäßig erwiesen, die feucht-feste Phase in einem nachfolgenden Verfahrensschritt zu trocknen, wodurch sich eine elutionsbeständige Trockensubstanz bildet. Diese Trockensubstanz kann beispielsweise problemlos deponiert werden.

Eine bevorzugte Alternative zur Lagerung der Trockensubstanz auf einer Deponie ist allerdings die Weiterverarbeitung zu einem Wirtschaftsgut, was insbesondere durch Zusatz von 20 bis 100 Gewichts-% Tonmineral geschehen kann. In einem zusätzlichen optionalen Verfahrensschritt kann das Gemisch aus Trockensubstanz und Tonmineral noch mit dem unter dem Handelsnamen CONSOLID bekannten Bodenverbesserungsmittel behandelt werden. Das Gemisch lässt sich besonders gut als Baumaterial zur Erstellung von Abdichtungen, Tragschichten und/oder Erosionsschutzflächen verwenden.

Die erfindungsgemäßen Verfahren werden nachstehend anhand von drei Beispielen näher beschrieben.

Das erste Beispiel betrifft die Behandlung einer Charge von 100 g Asche aus der Rauchgasreinigungs- und -entschwefelungsanlage einer Erdölraffinerie im Labor:

100 g Raffinations-Reststoffasche (REA-Asche ) wurden auf 1/10 g gewogen und in einen 3 1-Berzeliusbecher gefüllt. Es wurden 1000 g destilliertes Wasser in den Becher hinzugegeben und das Gemisch mit einem Magnetrührer homogenisiert. Es ergab sich eine Suspension mit einem pH-Wert von 2 bei 22° C.

Die Suspension wurde zunächst auf ca. 60° C vorerhitzt. 2 g Calciumhydroxid wurden als Pulver unter ständigem Rühren beigemischt. Das Gemisch wurde dann auf Siedetemperatur gebracht und in bestimmten Zeitabständen mit dem Magnetrührer weiter homogenisiert.

30 Minuten nach der ersten Zugabe von Calciumhydroxid wurden, unter ständigem Rühren, weitere 2 g Calciumhydroxid hinzugefügt. Unter Aufrechterhaltung der Siedetemperatur und weiterem ständigem Rühren wurden alle 15 Minuten jeweils weitere 2 g Calciumhydroxid bis zu einer Gesamtmenge von 34 g Calciumhydroxid hinzugegeben. Das verdampfte Wasser wurde dabei laufend durch Frischwasser ersetzt, so dass die Reaktion im Becher bei einem konstanten Wasservolumen von 1 l stattfand. In dem Zeitraum zwischen der ersten und der letzten Zugabe von Calciumhydroxid entgaste praktisch die gesamte, in der REA-Asche enthaltene Menge von Ammonium als Ammoniak. Bei diesem Laborver- such wurden die Dämpfe über den Laborluftabzug abgeführt.

Nach weiteren 25 Minuten wurden nochmals 2 g Calciumhydroxid in den Berzeliusbecher gegeben und das Gemisch unter ständigem Rühren ca. 2 Stunden lang gekocht. Danach konnte kein Ammoniak mehr festgestellt werden.

Abschließend wurden noch einmal 2 g Calciumhydroxid hinzugefügt, um durch eine Überdosierung von Calcium-Ionen und einen stark basischen pH-Wert alle in der REA-Asche enthaltenen Schwermetalle, insbesondere das Vanadium, in wasserunlöslicher Form zu binden.

Insgesamt wurden der REA-Asche 38 Gewichts-% Calciumhydroxid beigemischt. Nach dem Abkühlen des Gemischs auf etwa 30° C wurde ein pH-Wert von 11,8 gemessen.

Die so behandelte REA-Asche wurde ca. 48 Stunden im Berzeliusbecher stehengelassen. Dabei bildete sich an der Wasseroberfläche eine dünne Schicht von Gipsplättchen.

Die Probe wurde anschließend gravimetrisch filtriert mittels laborüblichem Filterpapier, um so die feucht-feste Phase von dem Prozesswasser zu trennen. Der erhaltene Filterkuchen wurde anschließend im Trockenschrank bei 105° C bis auf die Massenkonstanz getrocknet.

Die gewonnene Trockensubstanz wurde nun einer Qualitätsprüfung unterzogen. 10 g Trockensubstanz wurden mit 100 g destilliertem Wasser vermischt und 24 Stunden lang geschüttelt. Dies entspricht einer Prüfung auf Eluierbarkeit nach DIN 38414/S4. Die chemische Analyse des Eluats (S4) und des Prozesswassers zeigten eine weitgehende Immobilisierung aller Schwermetalle und der meisten übrigen Metalle sowie eine Reduzierung des Ammoniumgehalts auf unter 10 mg/l.

Als weitere Beispiele werden unter Bezugnahme auf die beigefügten Abbildungen zwei alternative Verfahren für den großtechnischen Einsatz beschrieben. Diese Verfahren sind für die Behandlung von 1700 Tonnen REA-Asche pro Jahr konzipiert.

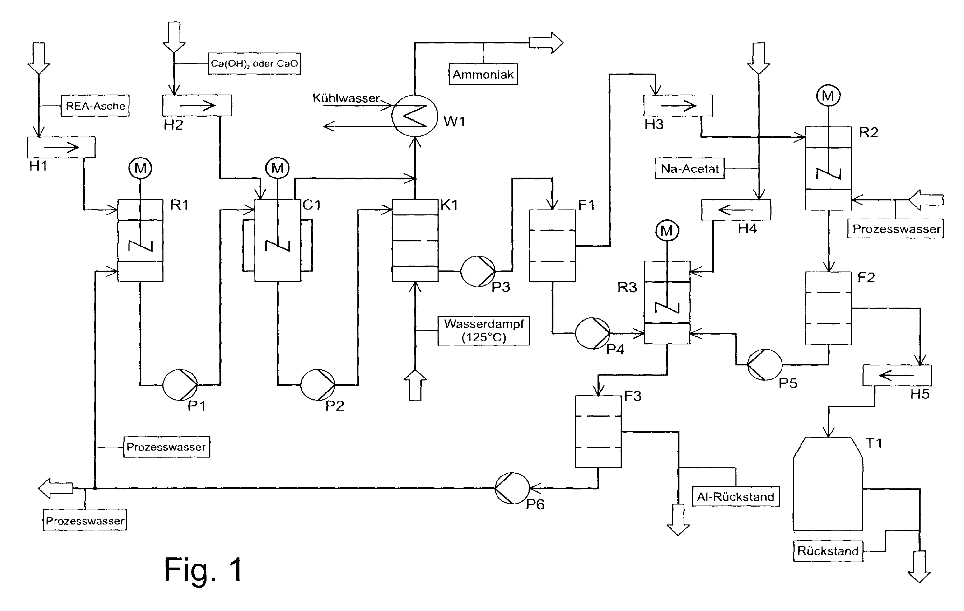

Gemäß dem Verfahrensfließbild von Figur 1 wird REA-Asche mittels eines ersten Stetigförderers A1 in einen ersten Rührbehälter R1 gegeben. Frisches Prozesswasser wird der REA-Asche im Rührbehälter R1 zugemischt, so dass sich eine Suspension bildet. Dabei wird die Suspension auf ca. 70° C erhitzt.

Die Suspension wird aus dem Rührbehälter R1 mittels einer ersten Pumpe P1 in einem chemischen Reaktor C1 gepumpt. Durch Zugabe von Calciumhydroxid oder Calciumoxid mittels eines zweiten Stetigförderers H2 in den Reaktor C1 wird eine chemische Reaktion ausgelöst. Das in der REA-Asche in Form von Ammoniumsulfat gebundene Ammonium beginnt, als Ammoniak zu entgasen. Die Temperatur im Reaktor C1 beträgt ungefähr 100° C.

Die vorerhitzte Suspension wird mittels der Pumpe P2 in eine Desorptionskolonne K1 gepumpt. Darin wird die Suspension mit Wasserdampf im Gegenstrom in Kontakt gebracht. Das Ammoniumsulfat wird vollständig gespalten in Sulfat und Ammoniak, welches aus der Desorptionskolonne K1 gasförmig nach oben entweicht und sich in einem darüber angeordneten Wärmetauscher W1 als wässrige Ammoniaklösung niederschlägt. Die Temperatur in der Desorptionskolonne K1 beträgt konstant etwa 125° C. Die Suspension verbleibt so lange in der Desorptionskolonne K1, bis kein Ammoniak mehr entweicht.

Nach Abschluß der chemischen Reaktion wird das heiße Gemisch mittels der Pumpe P3 in ein erstes Flüssigkeitsfilter F1 gepumpt. Dort wird die feucht-feste Phase vom Prozesswasser getrennt.

Die feucht-feste Phase gelangt über einen Stetigförderer H3 in einen zweiten Rührbehälter R2, dem frisches Prozesswasser zugeführt wird. Hierdurch wird das freigesetzte Aluminium aus der feucht-festen Phase ausgespült.

In einem nachgeschalteten zweiten Flüssigkeitsfilter F2 wird nun das mit Aluminium kontaminierte Prozesswasser von der feucht-festen Phase getrennt. Der verbleibende Filterkuchen gelangt über einen weiteren Stetigförderer H5 in einen Trockner T1 und wird dort zu einer elutionsbeständigen Trockensubstanz eingetrocknet. Diese Trockensubstanz enthält kein Ammonium und auch kein Aluminium mehr; die aus der REA-Asche stammenden Schwermetalle sind darin in wasserunlöslicher Form gebunden. Die aus dem Trockner T1 ausgetragene Trockensubstanz kann entweder gefahrlos deponiert oder durch Zugabe von Tonmineral zu einem Baumaterial weiterverarbeitet werden.

Das aus dem Flüssigfilter F1 abgeschiedene Prozesswasser wird mittels einer Pumpe P4 in einen dritten chemischen Reaktor R3 gepumpt. In diesen Reaktor R3 wird auch das aluminiumhaltige Spülwasser aus dem Flüssigkeitsfilter F2 durch eine Pumpe P5 gepumpt. In den Reaktor R3 wird ferner über einen vierten Stetigförderer H4 Natriumacetat zugegeben. Anstelle des Natriumacetats kann auch Essigsäure verwendet werden. Das in dem Prozesswasser bzw. Spülwasser in löslicher Form enthaltene Aluminium fällt im Reaktor R3 aus.

Der Inhalt des Reaktors R3 wird in ein drittes Flüssigkeitsfilter F3 entleert. Das ausgefüllte Aluminiumhydroxid wird ausgetragen und entsorgt.

Das im Flüssigkeitsfilter F3 abgeschiedene Prozesswasser wird durch eine Pumpe P6 abgepumpt und wird teilweise erneut als Prozesswasser verwendet.

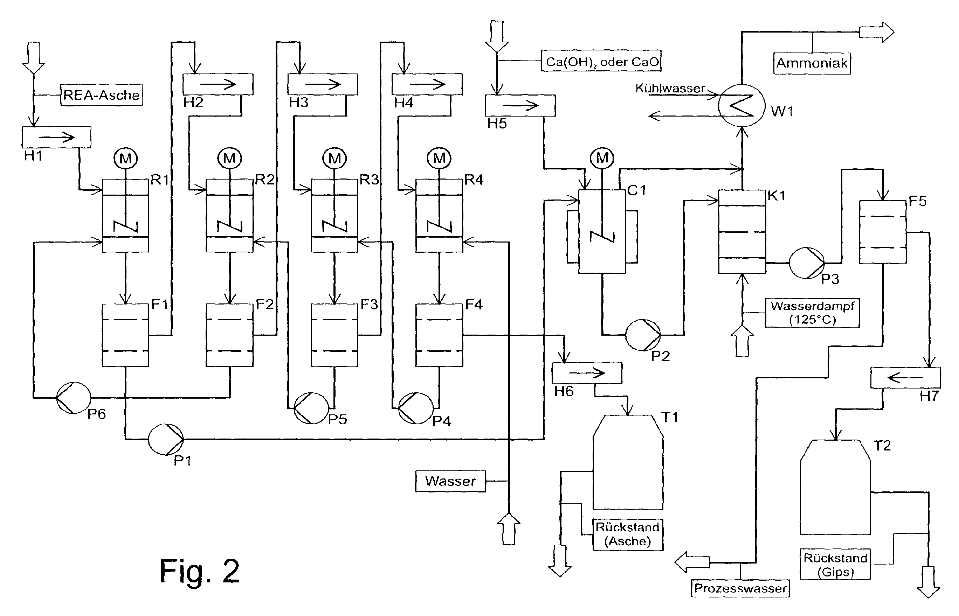

Figur 2 ist das Verfahrensfließbild einer Anlage, mit der ebenfalls 1700 Tonnen pro Jahr REA-Asche behandelt werden können. Im Prinzip finden in dieser Anlage die gleichen chemischen Reaktionen wie zuvor erläutert statt. Der Unterschied besteht darin, dass die REA-Asche zuerst mehrfach mit Wasser gewaschen wird, so dass sich die Schadstoffe im Prozesswasser aufkonzentrieren, und dass dann anschließend nur noch das Prozesswasser chemisch behandelt wird, um die darin gelösten Schadstoffe zu entfernen bzw. zu immobilisieren.

Das Waschen bzw. Ausspülen der schadstoffhaltigen REA-Asche erfolgt hier beispielhaft in einer Reihe von vier hintereinander angeordneten chemischen Reaktoren R1, R2, R3 und R4. Diesen sind jeweils Füssigkeitsfilter F1, F2, F3 und F4 zugeordnet. Die zu behandelnde REA-Asche gelangt über einen ersten Stetigförderer A1 zunächst in den ersten Reaktor R1 und durchläuft die nachfolgenden Reaktoren R2 bis R4 von links nach rechts. Frisches Prozesswasser gelangt zuerst in den letzten Reaktor R4 der Serie und wird von da im Gegenstrom durch die vorgeschalteten Reaktoren R3, R2 und R1 gegenläufig, also von rechts nach links geführt. Nach jedem Waschvorgang in einem der Reaktoren R1 bis R4 erfolgt eine Trennung der feucht-festen Phase vom Prozesswasser in den zugeordneten Flüssigkeitsfiltern F1 bis F4.

Nach dem letzten Waschgang im letzten Reaktor R4 und anschließender Trennung des Prozesswassers im zugehörigen Flüssigkeitsfilter F4 kann die feuchte, im wesentlichen schadstoffreie REA-Asche direkt in einen Trockner T1 geführt werden. Endprodukt ist eine Trockensubstanz, die gefahrlos deponiert oder zu einem Wirtschaftsgut weiterverarbeitet werden kann. Die gereinigte und getrocknete REA-Asche enthält über 90 % Kohlenstoff und kann beispielsweise zu Formkörpern verpresst werden, die als Brennstoff dienen.

Die aus der REA-Asche herausgelösten Schadstoffe haben sich in dem Prozesswasser aufkonzentriert, welches in dem Flüssigkeitsfilter F1 von der feucht-festen Phase getrennt wurde. Dieses kontaminierte Prozesswasser wird mittels einer Pumpe P1 in einen chemischen Reaktor C1 gepumpt. Über einen Stetigförderer H5 wird Calciumhydroxid oder Calciumoxid zugegeben. Bei einer Temperatur von ca. 70° im Reaktor C1 beginnt das Calciumhydroxid bzw. das Calciumoxid mit dem im Prozesswasser enthaltenen Ammoniumsulfat zu reagieren. Dabei bildet sich Ammoniak. Im Reaktor C1 herrscht eine Temperatur, die bis zur Siedetemperatur des Gemisches reichen kann.

Das Gemisch im Reaktor C1 wird nun durch eine Pumpe P2 in eine Desorptionskolonne K1 gepumpt. In diesen wird von unten Wasserdampf zugeführt. Dadurch erhitzt sich das Gemisch auf Siedetemperatur, wobei das Ammoniumsulfat vollständig zerfällt und das gasförmiges Ammoniak nach oben aus der Desorptionskolonne K1 entweicht. Sowohl im Reaktor C1 wie auch in der Desorptionskolonne kommt es zur kontinuierlichen Gipsbildung. Das Gemisch verbleibt solange bei Siedetemperatur in der Desorptionskolonne K1, bis im wesentlichen kein Ammoniak mehr entweicht. Anschließend wird das Gemisch durch die Pumpe P3 in ein weiteres Flüssigkeitsfilter F5 gepumpt. Das Gemisch kühlt auf eine Temperatur von ca. 30° C ab, wobei der pH-Wert mindestens 8 beträgt.

Das Prozesswasser wird von dem Gips getrennt. Der Gips gelangt über einen Stetigförderer H7 in einen zweitenTrockner T2. Die ursprünglich in der REA-Asche enthaltenen Schwermetalle sind nun in dem Gips in wasserunlöslicher Form gebunden.

Der Gips wird getrennt getrocknet und anschließend fein gemahlen, um als Wirtschaftsgut Verwertung zu finden.

### Zusammenstellung der Bezugszeichen

- H1 - H7: Stetigförderer
- R1 - R3: Rührbehälter mit Rührer
- M: Elektromotor
- C1: Chemischer Reaktor
- K1: Desorptionskolonne
- P1 - P6: Pumpen
- F1 - F5: Flüssigkeitsfilter
- W1: Wärmetauscher mit Kondensator
- T1, T2: Trockner

## Patentansprüche

1. Verfahren zur Behandlung von Rückständen aus Rauchgasreinigungs- und/oder Rauchgasentschwefelungsanlagen, insbesondere von Raffinerien, welche unter anderem Ammonium und Schwermetalle enthalten, **gekennzeichnet durch** die folgenden Verfahrensschritte:
- Vermischen der Rückstände mit Wasser, wobei sich eine Suspension bildet;
- Erhitzen der Suspension auf 50° bis 80° C;
- Zugabe von gelöschtem oder ungelöschtem Kalk oder von Kalkmilch;
- Erhitzen des Gemischs auf Siedetemperatur, wobei Ammoniak entweicht;
- Aufrechterhalten der Siedetemperatur solange, bis im wesentlichen kein Ammoniak mehr entweicht;
- Abkühlen des Gemischs auf eine Temperatur unter 30° C, wobei der pH-Wert mindestens 8 beträgt.
- Trennung des Prozesswassers von der feucht-festen Phase, in welcher die Schwermetalle in wasserunlöslicher Form gebunden sind.

2. Verfahren nach Anspruch 1, **dadurch gekennzeichnet,dass** das in der feucht-festen Phase enthaltene Aluminium mit frischem Wasser ausgespült wird.

3. Verfahren zur Behandlung von Rückständen aus Rauchgasreinigungs- und/oder Rauchgasentschwefelungsanlagen, insbesondere von Raffinerien, welche unter anderem Ammonium und Schwermetalle enthalten, **gekennzeichnet durch** die folgenden Verfahrensschritte:
- Vermischen der Rückstände mit Wasser, wodurch sich eine Suspension bildet;
- Erhitzen der Suspension auf 50° bis 80° C;
- Trennen der feucht-festen Phase von der wässrigen Lösung, welche das Ammonium und die Schwermetalle enthält;
- Zugabe von gelöschtem oder ungelöschtem Kalk oder von Kalkmilch in die wässrige Lösung;
- Erhitzen des Gemischs auf Siedetemperatur, wobei Ammoniak entweicht und Gips entsteht;
- Aufrechterhalten der Siedetemperatur solange, bis im wesentlichen kein Ammoniak mehr entweicht;
- Abkühlen des Gemischs auf eine Temperatur unter 30° C, wobei der pH-Wert mindestens 8 beträgt;
- Trennung des Prozesswassers von dem Gips, in welchem die Schwermetalle in wasserunlöslicher Form gebunden sind.

4. Verfahren nach einem der Ansprüche 1 bis 3, **dadurch gekennzeichnet, dass** die feucht-feste Phase getrocknet wird, wodurch sich eine elutionsbeständige Trockensubstanz bildet.

5. Verfahren nach Anspruch 4, **dadurch gekennzeichnet , dass** der Trockensubstanz 20 bis 100 Gewichts-% Tonmineral zugesetzt wird.

6. Verfahren nach Anspruch 5, **dadurch gekennzeichnet, dass** das Gemisch aus Trockensubstanz und Tonmineral mit dem Bodenstabilisierungsmittel CONSOLID behandelt wird.

7. Verwendung des durch ein Verfahren gemäß Anspruch 5 oder 6 hergestellten Gemischs als Baumaterial zur Erstellung von Abdichtungen, Tragschichten und/oder Erosionsschutzflächen
